Europäisches Patentamt

European Patent Office

Office européen des brevets

(11) Publication number: **0 109 053**
**B1**

(12) **EUROPEAN PATENT SPECIFICATION**

(45) Date of publication of patent specification: **10.01.90**

(21) Application number: **83111202.4**

(22) Date of filing: **10.11.83**

(51) Int. Cl.⁵: **C 08 K 3/26, C 08 L 27/06,**
**C 08 L 27/24**

(54) Stabilization of post chlorinated polyvinylchloride homopolymers.

(30) Priority: **12.11.82 US 440887**

(43) Date of publication of application:
**23.05.84 Bulletin 84/21**

(45) Publication of the grant of the patent:
**10.01.90 Bulletin 90/02**

(84) Designated Contracting States:
**BE CH DE FR GB IT LI NL SE**

(56) References cited:
**US-A-3 787 357**
**US-A-3 943 087**

**CHEMICAL ABSTRACTS, vol. 94, no. 8, 23rd
February 1981, page 41, no. 48318c, Columbus,
Ohio, USA**

The file contains technical information
submitted after the application was filed and
not included in this specification

(73) Proprietor: **The B.F. GOODRICH Company
Dept. 0015 WHB-6 500 South Main Street
Akron, Ohio 44318 (US)**

(72) Inventor: **Lehr, Marvin Harold
1252 Briarhill Spur
Bath, OH 44313 (US)**

(74) Representative: **von Kreisler, Alek, Dipl.-Chem.
et al
Deichmannhaus am Hauptbahnhof
D-5000 Köln 1 (DE)**

Courier Press, Leamington Spa, England.

**Description**

BACKGROUND OF THE INVENTION

Most synthetic polymer materials undergo deterioration when exposed to light and elevated temperatures over a prolonged period of time. Some polymers are so sensitive to heat that they will degrade objectionably even during the relatively short period of time they are exposed to elevated temperatures during many types of compounding and processing operations. The degradation effects of heat and light on polymers often can be at least temporarily retarded by mixing a heat and light stabilizer (normally referred to as a "primary stabilizer") with the polymer. The particular primary stabilizer chosen will depend upon the polymer to be stabilized.

Chlorine-containing synthetic polymers (whether the chlorine atom is introduced as a part of a monomer or is added by the post-chlorination of a previously formed polymer) are quite susceptible to heat degradation at most normal processing temperatures and, as a consequence, stabilization of the polymer is of significant importance.

US—A—3 943 087 deals with a fireproof self extinguishing composition comprising a polymer, from which a deleterious acid compound is evolved upon burning, and in excess of calcium carbonate or barium carbonate as absorbant and neutralizer.

JP—A—80 125 141 discloses a stable PVC resin composition that is discoloration resistant towards heat, comprising the PVC resin, barium carbonate, a lead stabilizer and a thioether stabilizer.

US—A—3 787 357 provides a heat stabilizer composition for PVC resins comprising an alkyl tin compound, barium carbonate and an organic salt acting as a liquifier for the barium carbonate.

Typical primary stabilizers used commercially for stabilizing chlorine-containing polymers include a wide variety of materials such as the barium, cadmium, zinc, tin and lead salts of monocarboxylic acids and the organotin and organoantimony stabilizers. Generally, from about 0.5 to 5.0 parts by weight of a primary stabilizer is used per 100 parts by weight of the polymer. However, even with the addition of a primary stabilizer, the polymer composition often is not sufficiently heat-stabilized to permit the composition to be used in processing techniques that require the composition to be heated to moderately high temperatures (for example, product forming by injection molding). Also, the cost of many of the preferred primary stabilizers is relatively high. Accordingly, stabilizer systems which provide better heat stabilization at a reduced cost are sought by the industry.

SUMMARY OF THE INVENTION

The present invention provides a composition containing a vinyl chloride polymer and a heat stabilization system based on barium carbonate, characterized in that a proportion of the heat stabilization system being at least one of particulate barium carbonate and particulate cadmium carbonate, said carbonates having a particle size of less than 10 μm, and that the vinyl chloride polymer is a post-chlorinated polyvinyl chloride polymer whereby said composition includes from 2.0 to 15.0 parts by weight of said carbonates per 100 parts by weight of said polymer and that said composition includes from 0.5 to 5.0 parts by weight of a dialkyltin stabilizer per 100 parts by weight of said homopolymer.

Although both barium carbonate and cadmium carbonate have proven to be effective in stabilizing vinyl chloride polymers, not all of the carbonate salts of metals of Group II of the Periodic Table produce the desired level of stabilization when combined with vinyl chloride polymers. For example, calcium carbonate, strontium carbonate and magnesium carbonate have not been found to produce the desired stabilization.

DETAILED DESCRIPTION OF THE INVENTION

The present invention utilizes particulate barium carbonate and/or cadmium carbonate, either alone or in combination with other stabilizers, to stabilize post chlorinated polyvinylchloride homopolymers. The barium carbonate or cadmium carbonate should have a surface area (when measured as described in the article by P. H. Emmett and E. Teller appearing in the Journal of American Chemical Society, Vol. 60, page 309 (1938) of at least 2M²/g, and preferably a surface area of at least 3M²/g, and, desirably, has a particle size below 10 μm.

The term "post chlorinated polyvinylchloride homopolymer", as used herein, includes post-chlorinated homopolymers of vinyl chloride or vinylidene chloride (post-chlorinated polyvinyl chloide polymers and post-chlorinated polyvinylidene chloride polymers). Preferred post chlorinated polyvinylchloride homopolymers for use in the present invention are those having a density in the range of from 1.46 to 1.65 grams/cc at 25°C and a chlorine content in the range of from 60% to 72% by weight.

Typical dialkyl tin stabilizers which are used in conjunction with the barium carbonate or cadmium carbonate include, for exmaple, dibutyltin dilaurate, dibutyltin maleate, di-n-octyltin maleate, dibutyltin bis(lauryl mercaptide), dibutyltin S,S-bis(isooctyl thioglycolate), dibutyltin β-mercaptoproprionate, di-n-octyltin S,S-bis(isooctyl thioglycolate), and di-n-octyltin-mercaptoproprionate.

About 2.0 to 15.0 parts by weight of barium carbonate or cadmium carbonate per 100 parts by weight of the post chlorinated polyvinylchloride homopolymer is used in the composition, although from 3.0 to 8.0 parts by weight of barium carbonate or cadmium carbonate per 100 parts by weight of the vinyl chloride polymer is preferred.

Further improvement in stabilization of the post chlorinated polyvinylchloride homopolymer can be realized if the particles of barium carbonate or cadmium carbonate are partially "neutralized" with an acid, such as citric acid, malic acid, tartaric acid, or phosphorous acid. The partial neutralization can be effected by treating the particulate barium carbonate or cadmium carbonate with an amount of acid to "neutralize" from about $\frac{1}{20}$ to $\frac{1}{5}$ by weight of the carbonate salt. The treatment of the carbonate with the acid produces a reaction of the acid with barium carbonate or cadmium carbonate at the surfaces of the particles.

The addition of from about 0.01 to 5.0 parts by weight per 100 parts by weight of the post chlorinated polyvinylchloride homopolymer of sodium citrate or potassium citrate or a metal salt of phosphoric acid having a particle size below 30 μm further enhances stabilization of the post chlorinated polyvinylchloride homopolymer.

The post chlorinated polyvinylchloride homopolymer composition also can include other compounding ingredients (such as reinforcing materials, fillers, lubricants, etc.) that normally are included in vinyl chloride polymer compositions.

The following examples illustrate the present invention more fully. The heat stability of the compositions tested was determined by measuring the "dynamic thermal stability" (DTS) of the composition using a Brabender Plastic-Corder torque rheometer with a No. 5 roller head (Model PLV 300). DTS is the time interval, expressed in minutes, between the start of mixing and breakdown (determined by a sudden increase in torque and change in melt temperature. A 3 minute warm-up period of the sample in the Brabender bowl was allowed before testing of the sample was begun.

Example I

A series of compositions were formed according to the formulations set forth in Table I by blending the ingredients together on a two-roll mill at about 200°C for 2 minutes. The DTS of each composition was measured. The results of the tests are reported in Table I.

## TABLE I

| Materials | Sample | 1 | 2 | 3 | 4 | 5 |
|---|---|---|---|---|---|---|
| | | (Grams) | | | | |
| CPVC[1] | | 100 | 100 | 100 | 100 | 100 |
| Barium carbonate[2] | | --- | 5.0 | 5.0 | --- | --- |
| Cadmium carbonate[3] | | --- | --- | --- | 5.0 | 5.0 |
| Organotin Stabilizer[4] (Thermolite®31) | | 2.0 | --- | 2.0 | --- | 2.0 |
| Polyethylene lubricant[5] | | 1.25 | 1.25 | 1.25 | 1.25 | 1.25 |
| DTS (minutes)* | | 11 | 7 | 20 | 6 | 23 |

*Brabender: 65 g. sample, 225°C. bowl temp., 45 rpm

[1] Post-chlorinated polyvinyl chloride resin, GEON®603x560 produced by The B.F.Goodrich Company, 66% by weight of chlorine

[2] With a surface area of $3.45M^2/g$.

[3] With a surface area of $3.53 M^2/g$.

[4] Dibutyltin-S,S'-bis(isooctyl mercaptoacetate).

[5] AC-629A produced by Allied Chemical Corporation.

EP 0 109 053 B1

Example II

A series of compositions were formed according to the formulations set forth in Table II by blending the ingredients together on a two-roll mill at about 200°C for 2 minutes. The DTS of each composition was measured. The results of the tests are reported in Table II.

## TABLE II

| Materials | Sample | 1 | 2 | 3 | 4 | 5 |
|---|---|---|---|---|---|---|
| | | (Grams) | | | | |
| CPVC (GEON®603x560) | | 100 | 100 | 100 | 100 | 100 |
| PE AC-629A | | 1.5 | 1.5 | 1.5 | 1.5 | 1.5 |
| Organotin stabilizer (Thermolite®31) | | 2.0 | 2.0 | 2.0 | 2.0 | 2.0 |
| Barium malate | | ----- | ----- | ----- | 0.5 | ----- |
| Potassium citrate (particle size - less than 30 μm) | | ----- | ----- | ----- | ----- | 0.5 |
| Barium carbonate (surface area - 1.90 $M^2/g$) | | ----- | 5.0 | ----- | 5.0 | 5.0 |
| Barium carbonate[1] (treated) | | ----- | ----- | 5.0 | ----- | ----- |
| DTS (minutes)* | | 11 | 15.5 | 20.5 | 24 | 25 |

*Brabender:  65 g. sample, 225°C. bowl temp., 45 rpm

[1]79 grams (0.40 mole) of barium carbonate powder (surface area - 1.90 $M^2/g$) was slurried in 400 cc of 50/50 water/methanol.  5.36 grams (0.040 mole) of malic acid dissolved in 100 cc of water were added to the aforesaid barium carbonate slurry.  The resulting mixture was stirred for 30 minutes.  The mixture was filtered and the treated barium carbonate residue was dried in a vacuum oven at 100°C. for 16 hours.

### Example III

A series of compositions were formed according to the formulations set forth in Table III by blending the ingredients together on a two-roll mill at about 200°C for 2 minutes. The DTS of each composition was measured. The results of the tests are reported in Table III.

TABLE III

| Materials | Sample | 1 | 2 | 3 | 4 | 5 |
|---|---|---|---|---|---|---|
| | | | (Grams) | | | |
| CPVC (GEON® 603x560) | | 100 | 100 | 100 | 100 | 100 |
| Polyethylene lubricant[1] | | 1.5 | 1.5 | 1.5 | 1.5 | 1.5 |
| Organotin stabilizer (Thermolite® 31) | | 2.0 | 2.0 | 2.0 | 2.0 | 2.0 |
| Barium carbonate (surface area -3.45$M^2$/g) | | ---- | 5.0 | ----- | ----- | ----- |
| Barium carbonate - malic acid treated (see Ex. II) | | ----- | ----- | 5.0 | ----- | ----- |
| Barium carbonate citric acid - treated (see Ex. III). | | ----- | ----- | ----- | 5.0 | ----- |
| Barium carbonate[2] (treated) | | ----- | ----- | ----- | ----- | 5.0 |
| DTS (minutes)* | | 11 | 19 | 21 | 30 | 28 |

*Brabender: 65 g. sample, 225°C. bowl temp., 45 rpm
[1] AC-629A produced by Allied Chemical Company.
[2] 79 grams (0.40) mole of barium carbonate powder (surface area - 3.45$M^2$/g was slurried in 400 cc of 50/50 water/methanol. 5.52 grams (0.040 mole) of monobasic sodium phosphate dissolved in 100 cc of water were added to the aforesaid barium carbonate slurry. The resulting mixture was stirred for 30 minutes. The mixture was filtered and the treated barium carbonate residue was dried in a vacuum oven at 100°C. for 16 hours.

Example IV

A series of compositions were formed according to the formulations set forth in Table V by blending the ingredients together on a two-roll mill at about 200°C for 2 minutes. The DTS of each composition was measured. The results of the tests are reported in Table IV.

TABLE IV

| Materials | Sample | 1 | 2 | 3 | 4 | 5 | 6 |
|---|---|---|---|---|---|---|---|
| CPVC (GEON®603x560) | | 100 | 100 | 100 | 100 | 100 | 100 |
| PE AC-629A | | 1.5 | 1.5 | 1.5 | 1.5 | 1.5 | 1.5 |
| Organotin stabilizer (Thermolite®31) | | 2.0 | 2.0 | 2.0 | 2.0 | 2.0 | 2.0 |
| Barium carbonate (surface area - 1.90 $M^2$/g) | | ----- | ----- | ----- | 5.0 | 5.0 | 5.0 |
| Potassium citrate (particle size - less than 30 μm) | | ----- | 0.5 | 1.0 | ----- | 0.5 | 1.0 |
| DTS (minutes)* | | 11 | 17 | 22 | 14 | 25 | 39 |

*Brabender: 65g. sample, 225°C. bowl temp., 45 rpm.

EP 0 109 053 B1

Example V

A series of compositions were formed according to the formulations set forth in Table V by blending the ingredients together on a two-roll mill at about 200°C for 2 minutes. Ferric acetylacetonate was included in Samples 6—11 in the amounts indicated. The DTS of each composition was measured. The results of the tests are reported in Table V.

TABLE V

| Materials | Sample | 1 | 2 | 3 | 4 | 5 | 6 |
|---|---|---|---|---|---|---|---|
| | | | Grams) | | | | |
| CPVC[1] | | 100 | 100 | 100 | 100 | 100 | 100 |
| PE AC-629A | | 1.25 | 1.25 | 1.25 | 1.25 | 1.25 | 1.25 |
| Organotin stabilizer (Thermolite®31) | | 3.0 | 3.0 | 3.0 | 3.0 | 3.0 | 3.0 |
| Barium carbonate (surface area - 3.45M$^2$/g) | — | ----- | 5.0 | 5.0 | 5.0 | ----- | ----- |
| Potassium citrate (particle size - less than 30 μm) | | ----- | ----- | 0.5 | 1.0 | 0.5 | ----- |
| | | | *(Parts per Million) | | | | |
| Ferric acetylacetonate* | ----- | ----- | ----- | ----- | ----- | ----- | 1.6 |
| DTS (minutes)** | | 8 | 13 | 18 | 19 | 13.5 | 5 |

**Brabender: 67g. sample, 225°C. bowl temp., 45 rpm.

[1]Post-chlorinated polyvinyl chloride, GEON®666x512 produced by The B.F.Goodrich Company, 63.5% by weight of chlorine.

EP 0 109 053 B1

TABLE V (continued)

| Materials | Sample | 7 | 8 | 9 | 10 | 11 |
|---|---|---|---|---|---|---|
| | | (Grams) | | | | |
| CPVC[1] | | 100 | 100 | 100 | 100 | 100 |
| PE AC-629A | | 1.25 | 1.25 | 1.25 | 1.25 | 1.25 |
| Organotin stabilizer (Thermolite®31) | | 3.0 | 3.0 | 3.0 | 3.0 | 3.0 |
| Barium carbonate (surface area - 3.45M$^2$/g) | | ----- | ----- | 5.0 | 5.0 | 5.0 |
| Potassium citrate (particle size - less than 30 μm) | | 0.5 | ----- | ----- | 0.5 | 1.0 |
| | | *(Parts per Million) | | | | |
| Ferric acetylacetonate* | | 1.6 | 8.0 | 8.0 | 8.0 | 8.0 |
| DTS (minutes)** | | 12 | 3 | 10 | 16 | 18 |

**Brabender:  67g. sample, 225°C. bowl temp., 45 rpm.

[1]Post-chlorinated polyvinyl chloride, GEON®666x512 produced by The B.F.Goodrich Company, 63.5% by weight of chlorine.

EP 0 109 053 B1

The test results of Example V illustrate the deleterious effect which iron contamination in vinyl chloride polymer has on heat stability and that the deleterious effect can be overcome effectively through the use of the present invention.

The stabilized vinyl chloride polymer compositions of the present invention can be formed into products in the customary ways such as by injection molding, extrusion, sheeting and closed-mold shaping.

As can be seen from the description and example, the present invention provides a means for more effectively stabilizing vinyl chloride polymers while at the same time realizing a cost savings by permitting smaller quantities of relatively expensive stabilizers to be used while maintaining a desired level of heat stabilization.

## Claims

1. A composition containing a vinyl chloride polymer and a heat stabilization system based on barium carbonate, characterized in that a proportion of the heat stabilization system being at least one of particulate barium carbonate and particulate cadmium carbonate, said carbonates having a particle size of less than 10 µm, and that the vinyl chloride polymer is a post-chlorinated polyvinyl chloride polymer whereby said composition includes from 2.0 to 15.0 parts by weight of said carbonates per 100 parts by weight of said polymer and that said composition includes from 0.5 to 5.0 parts by weight of a dialkyltin stabilizer per 100 parts by weight of said homopolymer.

2. The composition of claim 1 wherein said composition contains from 3.0 to 8.0 parts by weight of said carbonates per 100 parts by weight of said polymer.

3. The composition of any preceding claim wherein said post-chlorinated polyvinyl chloride polymer possesses a density in the range of from 1.46 to 1.65 grams/cubic centimeter at 25°C and a chlorine content in the range of from 60% to 72% by weight.

4. The composition of any preceding claim wherein said post-chlorinated polyvinylchloride is a post-chlorinated polyvinylchloride homopolymer.

5. The composition of any preceding claim wherein said composition includes from 0.01 to 5.0 parts by weight of one of sodium citrate, potassium citrate, and a metal salt of phosphoric acid having a particle size less than 30 µm per 100 parts by weight of said homopolymer.

6. The composition of any preceding claim wherein said barium carbonate or cadmium carbonate has been partially neutralized with an acid.

## Patentansprüche

1. Zusammensetzung, enthaltend ein Vinylchlorid-Polymer und ein Wärme-Stabilisierungssystem auf Bariumcarbonat-Basis, dadurch gekennzeichnet, daß ein Teil des Wärme-Stabilisierungssystems wenigstens eine der Komponenten teilchenförmiges Bariumcarbonat und teilchenförmiges Cadmiumcarbonat ist, wobei die Carbonate eine Teilchengröße von weniger als 10 µm besitzen, und daß das Vinylchlorid-Polymer ein nachchloriertes Polyvinylchlorid-Polymer ist, wobei die Zusammensetzung 2,0 bis 15,0 Gew.-Teile der Carbonate auf 100 Gew.-Teile des Polymers enthält und daß die Zusammensetzung 0,5 bis 5,0 Gew.-Teile eines Dialkylzinn-Stabilisators auf 100 Gew.-Teile des Homopolymers enthält.

2. Zusammensetzung nach Anspruch 1, worin die Zusammensetzung 3,0 bis 8,0 Gew.-Teile der Carbonate auf 100 Gew.-Teile des Polymers enthält.

3. Zusammensetzung nach irgendeinem vorhergehenden Anspruch, worin das nachchlorierte Polyvinylchlorid-Polymer eine Dichte im Bereich von 1,46 bis 1,65 g/cm³ bei 25°C und einen Chlor-Gehalt im Bereich von 60 bis 72 Gew.-% besitzt.

4. Zusammensetzung nach irgendeinem vorhergehenden Anspruch, worin das nachchlorierte Polyvinylchlorid ein nachchloriertes Polyvinylchlorid-Homopolymer ist.

5. Zusammensetzung nach irgendeinem vorhergehenden Anspruch, worin die Zusammensetzung 0,01 bis 5,0 Gew.-Teile einer der Verbindungen Natriumcitrat, Kaliumcitrat und Metall-Salz der Phosphorsäure mit einer Teilchengröße von weniger als 30 µm auf 100 Gew.-Teile des Homopolymers enthält.

6. Zusammensetzung nach irgendeinem vorhergehenden Anspruch, worin das Bariumcarbonat oder Cadmiumcarbonat mit einer Säure partiell neutralisiert ist.

## Revendications

1. Composition contenant un polymère de chlorure de vinyle et un système de stabilisation à la chaleur à base de carbonate de baryum, caractérisé en ce qu'une proportion du système de stabilisation à la chaleur est au moins un carbonate de baryum particulaire ou un carbonate de cadmium particulaire, lesdits carbonates ayant une taille particulaire inférieure à 10 µm, et en ce que le polymère de chlorure de vinyle est un polymère de chlorure de vinyle post-chloré, ladite composition comprenant entre 2 et 15 parties en

14

poids desdits carbonates pour 100 parties en poids dudit polymère et en ce que ladite composition comprend entre 0,5 et 5 parties en poids d'un stabiliseur dialkyl-étain pour 100 parties en poids dudit homopolymère.

2. Composition selon la revendication 1, qui contient de 3 à 8% en poids desdits carbonates pour 100 parties en poids dudit polymère.

3. Composition selon l'une quelconque des revendications précédentes, dans laquelle ledit polymère de chlorure de polyvinyle post-chloré possède une densité comprise dans la gamme allant de 1,46 à 1,65 g/cm$^3$ à 25°C et une proportion de chlore comprise dans la gamme allant de 60% à 72% en poids.

4. Composition selon l'une quelconque des revendications précédentes, dans laquelle ledit chlorure de polyvinyle post-chloré est un homopolymère de chlorure de polyvinyle post-chloré.

5. Composition selon l'une quelconque des revendications précédentes, qui comprend de 0,01 à 5 parties en poids d'un citrate de sodium, d'un citrate de potassium, ou d'un sel métallique d'acide phosphorique ayant une taille particulaire inférieure à 30 µm pour 100 parties en poids dudit homopolymère.

6. Composition selon l'une quelconque des revendications précédentes, dans laquelle ledit carbonate de baryum ou ledit carbonate de cadmium a été partiellement neutralisé avec un acide.